# FASCICULE DE BREVET EUROPEEN

(11) **EP 0 666 165 B1**
(45) Date de publication et mention de la délivrance du brevet: **25.08.1999**
(21) Numéro de dépôt: 95100658.4
(22) Date de dépôt: 19.01.1995
(51) Int. Cl.: B29D 30/00, B29D 30/10

(54) **Assemblage et vulcanisation de pneumatiques**
Konfektionierung und Vulkanisation von Reifen
Tyre assembling and vulcanizing

(30) Priorité: 02.02.1994 FR 9401476
(43) Date de publication de la demande: 09.08.1995
(73) Titulaire: SEDEPRO, F-75015 Paris (FR)
(72) Inventeur: Laurent, Daniel, F-38240 Meylan (FR)
(74) Mandataire: Bauvir, Jacques

(56) Documents cités:
- EP-A- 0 242 840
- EP-A- 0 246 498
- EP-A- 0 481 805
- WO-A-92/00846
- DE-B- 1 204 814
- FR-A- 2 364 113
- FR-A- 2 391 063
- FR-A- 2 407 068
- GB-A- 2 179 307
- US-A- 1 411 588
- US-A- 3 682 576
- US-A- 4 075 054

## Description

La présente invention se rapporte à la fabrication de pneumatiques en caoutchouc. On sait que la fabrication de pneumatiques comprend en général des étapes préliminaires de préparation de produits semi-finis, et comporte toujours une étape d'assemblage du pneumatique et une étape de vulcanisation.

L'étape d'assemblage consiste à superposer les différents constituants du pneumatique selon un ordre convenable, défini par l'architecture du pneumatique, afin d'obtenir ce que l'on appelle un pneu cru. L'étape de vulcanisation a pour but de figer le pneumatique dans une forme définitive. A cette fin, on utilise un moule de forme adéquate, et l'on soumet le caoutchouc cru à une certaine pression de moulage, bien supérieure à la pression atmosphérique, pendant que l'on communique au caoutchouc cru les calories nécessaires à la réaction de vulcanisation par une élévation de température du pneumatique cru.

On applique en cela une loi de vulcanisation, que l'homme du métier n'a aucune peine à établir, et qui s'exprime par une période de temps donnée, pendant laquelle on maintient le pneumatique à vulcaniser à un niveau de température donné, en général constant, tout en le maintenant sous pression afin d'éviter la présence de bulles gazeuses au sein du caoutchouc et afin de garantir un parfait moulage de la forme finale de fabrication.

Les usines de fabrication de pneumatiques comportent des ateliers dédiés à l'assemblage des pneumatiques, dont le rôle est de réaliser des pneumatiques crus, et des ateliers dédiés à la vulcanisation de ceux-ci. Il en résulte une circulation des pneumatiques crus entre ateliers, circulation responsable d'un en-cours de fabrication important. Il a déjà été proposé par le brevet US 4 877 468 une organisation en flux tendus qui coordonne les flux entre les différents ateliers de fabrication de pneumatique. Mais, dans une installation aussi complexe que la fabrication de pneumatiques, la production d'une telle installation reste trop sensible à des pannes affectant une phase seulement de celle-ci. La pratique industrielle a démontré qu'il est nécessaire de disposer de stocks tampons pour supporter sans mal les défaillances passagères d'un outil de production complexe.

L'objectif de la présente invention est de simplifier considérablement l'agencement de la fabrication des pneumatiques. L'invention propose pour cela d'imbriquer véritablement les étapes d'assemblage et de vulcanisation, et de condenser le procédé de fabrication en éliminant tous les stocks tampons.

Un autre objectif de l'invention est de simplifier l'installation en usine des moyens de fabrication de pneumatiques.

Selon l'invention, le procédé de fabrication de pneumatiques en caoutchouc, comportant une étape d'assemblage suivie d'une étape de moulage et de vulcanisation suivie d'une étape de démoulage, l'étape de vulcanisation utilisant un moule imposant au pneumatique au moins en partie sa forme finale de fabrication, ledit moule étant constitué de plusieurs éléments, séparables les uns des autres, au moins un desdits éléments formant un support démantelable formant, en fonctionnement lors de l'assemblage, une surface de révolution stable, ledit support étant utilisé pour ladite fabrication depuis l'assemblage jusqu'à la vulcanisation, comprenant les étapes suivantes :
1) reconstituer la configuration initiale utilisée en assemblage pour ledit support et positionner le support à un poste d'assemblage du pneumatique,
2) amener successivement et au moins en partie sur ledit support, en prenant pour référence d'assemblage ledit support, tous les constituants du pneumatique, dans l'ordre et à la place requis par l'architecture du pneumatique,
3) transférer ledit support à un poste de vulcanisation,
4) fermer l'espace de moulage du pneumatique et procéder à la vulcanisation de celui-ci, par l'action de la température et de la pression, pendant une période de temps déterminée par la loi de vulcanisation du pneumatique considéré,
5) démouler le pneumatique, cette opération comprenant un démantèlement dudit support pour libérer le pneumatique, et transférer ledit support pour reprendre les étapes précédentes et ainsi enchaîner la fabrication d'un autre pneumatique,
lesdits transferts étant effectués par au moins un moyen de transfert circulant sur un châssis, ledit châssis étant utilisé comme support desdits transferts, et auquel sont fixés le poste d'assemblage et le poste de vulcanisation et permettant de transporter les organes qu'il supporte en un état opérationnel.

Par l'expression "moule rigide", ou "support rigide", on entend que le moule ou le support résiste à la déformation plutôt comme l'acier que comme le caoutchouc. Il va cependant de soi que, la rigidité étant une notion relative, l'invention n'exclut pas que le moule ou le support considérés puissent subir de petites déformations. Par l'expression 〈〈 support démantelable 〉〉, on vise en toute généralité un support qui soit démontable ou escamotable, ou qui puisse subir toute transformation de forme dont la finalité est qu'il ne gêne pas l'enlèvement et l'évacuation du pneumatique vulcanisé. Lors de l'opération de démoulage du pneumatique, le démentèlement du support a lieu radialement, ce qui suppose que le mouvement du support par rapport au pneumatique comprenne des mouvements radiaux.

On entend par 〈〈surface continue〉〉 une surface unitaire ; c'est cette surface continue qui sert de référence initiale pour la fabrication ; cela n'exclut pas bien entendu que certains outils amenant les constituants portent ceux-ci sur des surfaces, que l'on rapproche du support pour assembler les constituants les uns aux autres. On entend par 〈〈surface stable〉〉 une surface dont la géométrie n'est pas sensiblement modifiée par les opérations de dépose des constituants. Par exemple, si l'une de ces opérations comporte un rouletage, ladite surface doit permettre le rouletage.

Suivant une variante de l'invention, après la vulcanisation et avant d'enchaîner la fabrication d'un autre pneumatique, le support est refroidi pour en ramener la température à un niveau très supérieur à la température ambiante mais inférieur à un seuil au delà duquel la vulcanisation se développe. Ce seuil dépend du système de vulcanisation utilisé.

L'invention fait usage de la technique d'assemblage d'un pneu sur un support imposant la forme interne ou externe du pneu. Dans la inise en oeuvre de l'invention, la période de temps nécessaire pour assembler un pneumatique, puis pour l'amener dans les conditions permettant sa vulcanisation est faible. En fixant ledit seuil à une température de l'ordre de 130°C, on peut considérer que la vulcanisation ne démarre pas avant l'introduction du pneu cru au poste de vulcanisation.

Un avantage qu'il y a à abaisser la température à un niveau un peu inférieur encore, par exemple à un niveau compris entre 80°C et 110°C, est que l'on favorise l'adhésion de la première couche de caoutchouc dont on doit revêtir le support au poste d'assemblage pour débuter l'assemblage du pneu, en particulier si celui-ci est un noyau lisse déterminant la forme de la cavité interne du pneu.

Le temps nécessaire à l'assemblage du pneu cru dépend des moyens choisis pour réaliser celui-ci. Afin de pouvoir bien coordonner les cycles d'assemblage et de vulcanisation, on peut utiliser le procédé de l'invention en mettant en jeu plusieurs moules simultanément. Si la loi de vulcanisation conduit à une période de temps plus longue pour la vulcanisation que le temps nécessaire à l'assemblage du pneumatique, on peut utiliser de préférence un poste de vulcanisation pouvant accueillir plusieurs moules en même temps, associé à un poste d'assemblage assemblant un seul pneu à la fois. Si par exemple le poste de vulcanisation peut accueillir trois moules, alors en première approximation, la période nécessaire à la vulcanisation peut être trois fois plus longue que le temps nécessaire à l'assemblage (sans tenir compte de l'influence des temps de transfert entre postes sur le cycle global).

Selon un mode de réalisation, ledit support est un noyau démontable, permettant de définir la surface interne du pneumatique, sur lequel on dépose les différents constituants du pneumatique. Le procédé comporte alors les étapes suivantes :
- fermer une partie extérieure de moule autour du pneumatique cru fabriqué sur le noyau,
- apporter à la partie extérieure du moule et audit noyau les calories nécessaires à la vulcanisation,
- ouvrir la partie extérieure du moule,
- démonter et extraire le noyau rigide hors de l'intérieur du pneumatique pour séparer celui-ci du noyau, et évacuer le pneumatique,
- reconstituer le noyau servant de support.

Dans ce cas, pour tirer pleinement profit de l'invention, on utilise de préférence au moins un noyau de plus que de moule extérieur, afin de pouvoir assembler un pneumatique (étape 2 du procédé décrit ci-dessus) pendant qu'un autre est en phase de vulcanisation (étape 4 du procédé décrit ci-dessus), ce qui permet de garantir un bon taux d'utilisation des moules.

Lorsque l'on utilise le principe de vulcanisation en moule rigide, comportant un moule extérieur et un noyau comme décrit dans le brevet EP 0 242 840, afin de pouvoir utiliser indifféremment plusieurs noyaux avec plusieurs moules extérieurs, il convient de respecter des tolérances de fabrications très étroites sur ces pièces, afin que le volume de moulage du pneumatique reste sensiblement constant. On peut éventuellement élargir les tolérances de fabrication de ces pièces en utilisant au moins deux noyaux par moule extérieur, et en respectant toujours les mêmes associations d'un moule avec ses noyaux correspondant.

L'invention propose également une machine de fabrication de pneumatiques utilisant au moins un support formant, en configuration utilisée pour l'assemblage, une surface de révolution présentant une forme continue, proche de la forme finale de fabrication du pneumatique, ledit support étant utilisé comme surface de référence pour la fabrication desdits pneumatiques du début de l'assemblage jusqu'à la vulcanisation, ladite machine comportant, arrangés de façon adjacente sur un même châssis :
- un poste d'assemblage du pneumatique, comportant des moyens pour saisir et maintenir le support et des moyens pour former le pneumatique cru en déposant sur le support différents constituants dans l'ordre et à la place requise par l'architecture du pneumatique,
- un poste de vulcanisation,
- des moyens de transport du support entre les différents postes circulant sur ledit châssis.

Suivant un autre aspect, l'invention propose une machine de fabrication de pneumatiques comportant au moins un support formant, en configuration utilisée pour l'assemblage, une surface de révolution présentant une forme continue, proche de la forme finale de fabrication du pneumatique, ledit support étant utilisé comme surface de référence pour la fabrication desdits pneumatiques du début de l'assemblage jusqu'à la vulcanisation, ladite machine comportant, arrangés de façon adjacente sur un même châssis :
- un poste d'assemblage du pneumatique, comportant des moyens pour saisir et maintenir le support et des moyens pour former le pneumatique cru en déposant sur le support différents constituants dans l'ordre et à la place requise par l'architecture du pneumatique,
- un poste de vulcanisation,
et comportant des moyens de transport du support entre les différents postes.

Suivant un aspect de la présente invention, la surface du support est avantageusement contenue entre deux limites axialement séparées l'une de l'autre d'une distance sensiblement constante. Par l'expression 〈〈 forme proche de la forme finale 〉〉, on veut signifier, dans le présent mémoire, que jusqu'au démoulage, ledit support n'impartira au pneumatique en cours de fabrication aucun mouvement de conformation autre qu'éventuellement une légère expansion pendant l'étape de moulage et de vulcanisation. Autrement dit, pendant l'étape d'assemblage, le support ne connait aucun mouvement, alors que au début de l'étape de vulcanisation, le support peut éventuellement se voir impartir un léger mouvement d'amplitude toujours inférieure à l'épaisseur des produits posés sur le support.

L'un des avantages de la conception selon l'invention, est qu'il est possible de monter complètement une telle machine et de la tester, en un lieu spécialisé pour le montage de telles machines. Lorsque la machine est opérationnelle, on la transporte vers l'usine de fabrication des pneumatiques, où elle peut entrer en production immédiatement ou après seulement quelques raccordements ou installation de modules et/ou mises en service simples à exécuter, ce qui n'exclut pas, le cas échéant, le montage de quelques organes périphériques. Cela est tout particulièrement vrai dans le cas de la machine comportant différents postes agencés sur un châssis, le transport de celle-ci même dans un état 〈〈 prêt à fonctionner〉〉 étant alors possible et très simple.

Cela permet également de construire une machine très compacte, effectuant à la fois l'assemblage et la vulcanisation. Avant l'invention, on n'a fait usage que des machines individuelles d'assemblage telles qu'en proposent de nombreux fabricants de machines d'assemblage de pneus, ou des chaînes d'assemblage, dans lesquelles des tambours d'assemblage circulent devant différents organes de pose des produits appelés "serviceurs", comme décrit par exemple dans le brevet US 3 281 304. Quelle que soit l'approche suivie pour installer une capacité de production donnée, cela conduisait toujours à occuper sensiblement la même surface au sol. L'utilisation de l'invention permet de réduire considérablement, c'est à dire de l'ordre de 75%, la surface occupée au sol pour une capacité de production donnée.

Suivant un mode de réalisation préféré de la présente invention, la machine comporte un poste dédié à la manipulation du support. Les postes de confection, de montage et démontage du support, et de vulcanisation sont de préférence alignés sur le même châssis. De façon avantageuse, lesdits moyens de transport sont agencés pour mouvoir le support alors que son axe est horizontal, en assurant de préférence un mouvement entre postes parallèlement à l'axe du support. Cela permet de rendre la machine aussi compacte que possible.

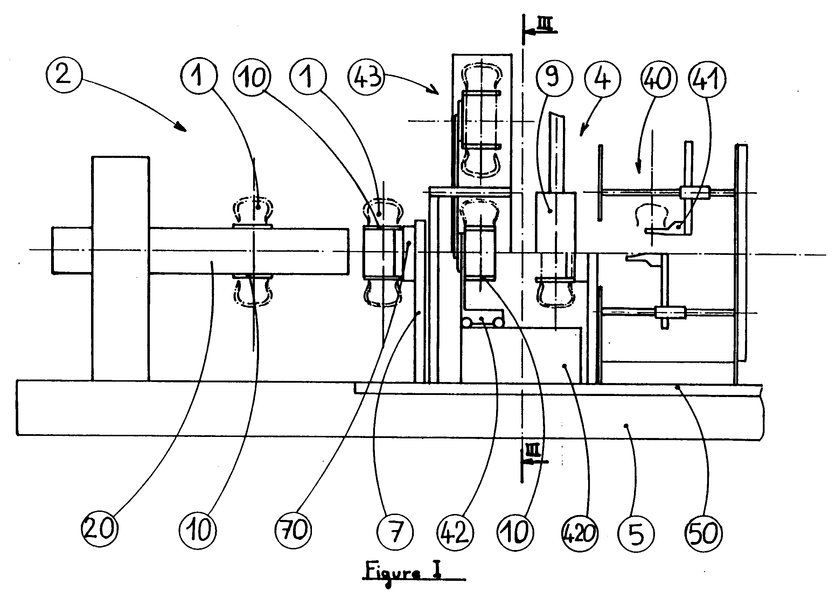

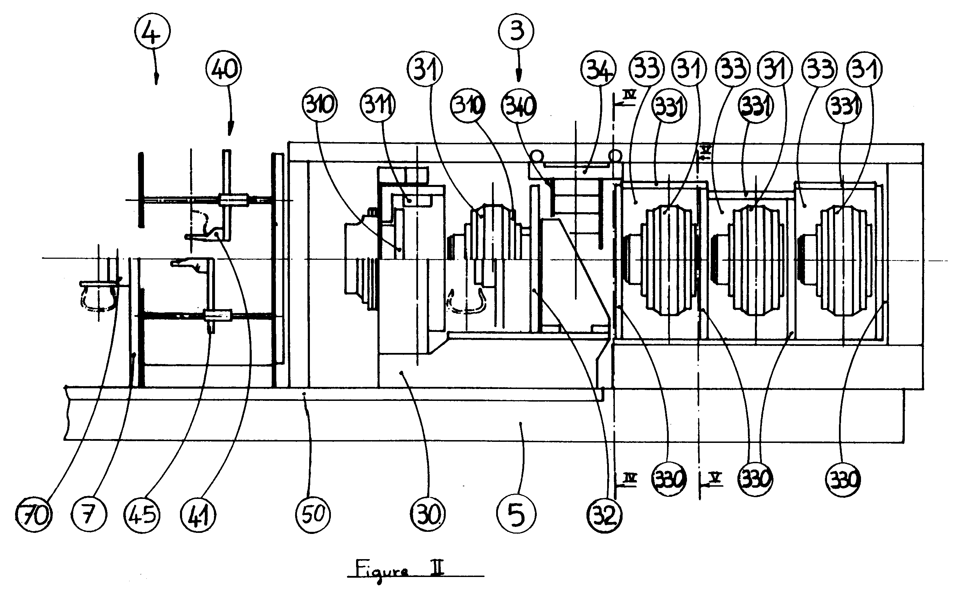

Tous les détails sont donnés avec la description des figures jointes, illustrant un mode de réalisation de l'invention.
La figure 1 est une vue en élévation, montrant partiellement une machine selon l'invention ;
La figure 2 est une vue complémentaire de la figure précédente ;
La figure 3 est une vue selon III/III à la figure 1 ;
La figure 4 est une vue selon IV/IV à la figure 2 ;
La figure 5 est une vue selon V/V à la figure 2 ;
Chacune des figures 1 et 2 reprend une partie de l'autre afin de bien faire apparaître la machine dans son ensemble. Un noyau 1 est représenté à différents endroits. Il ne s'agit pas nécessairement de noyaux différents. Il peut s'agir du même noyau représenté à différents endroits, ou de quelques noyaux, selon le nombre de noyaux utilisés. Tantôt, le noyau représenté supporte un pneumatique ou une ébauche de pneumatique, ce qui est schématisé par un trait doublant le profil du noyau, tantôt le noyau est nu. En outre, à certains endroits, on a représenté des configurations successives différentes de la machine, en dessous et au dessus du trait d'axe longitudinal. Cette représentation a pour but de montrer l'état de la machine à différentes étapes successives du procédé de fabrication.

Un poste d'assemblage 2, un poste de manipulation du support, appelé plus simplement dans le cadre de cet exemple "poste noyau" 4, et un poste de vulcanisation 3 sont montés sur un même châssis 5. Chacun de ces postes est constitué d'un ou de plusieurs modules fixés audit châssis 5.

La circulation du ou des noyaux entre les différents postes est assurée par des moyens de transport du noyau 1, utilisés pour les mouvements suivants :
- transporter le support portant un pneumatique cru depuis le poste d'assemblage vers le poste de vulcanisation,
- transporter le support sortant du poste de vulcanisation vers le poste de manipulation du support,
- transporter le support depuis le poste de manipulation vers le poste d'assemblage.

C'est le rôle d'une potence 7 montée coulissante sur un rail 50 disposé le long du châssis 5. Le rail 50 constitue un moyen de guidage monté de façon solidaire audit châssis 5. La potence 7 est équipée d'un préhenseur 70 capable de saisir un noyau 1 par la base radialement intérieure de celui-ci. Les différents eléments constitutifs du noyau 1 sont solidarisés par une jante 10 insérée radialement sous lesdits éléments. Cette jante 10 portant le noyau 1 peut être accouplée à la demande au préhenseur 70, par un mécanisme à crochetage, ou un mécanisme similaire.

Au poste d'assemblage 2, la jante 10 est montée sur un arbre 20 qui la supporte tout en pouvant entraîner en rotation le noyau 1 pour effectuer la dépose de tous les produits constituant le pneu cru, à savoir les différents mélanges de caoutchouc et les armatures de renforcement. La présente invention ne concerne pas la réalisation des dispositifs nécessaires à assurer cette dépose.

A titre d'exemple non limitatif, on pourra se reporter aux demandes EP-0 243 851, EP-0 248 301, EP-0 353 511, EP-0 519 295, EP-0 519 294, EP-0 580 055 ou EP-0 582 215 qui décrivent des dispositifs dont on peut implanter un ou des exemplaires, identiques ou différents, pour poser les fils de renforcement. On pourra consulter les brevets EP-0 264 600 ou EP-0 400 496 qui décrivent des dispositifs utilisables pour appliquer les mélanges de caoutchouc sur un noyau 1.

Après réalisation d'un pneu cru, ladite potence 7 peut, au poste d'assemblage 2, saisir le noyau 1 supportant un pneu cru, et le transporter vers le poste de vulcanisation 3 (voir figure 2). La même potence 7 peut transporter un noyau 1 supportant un pneu vulcanisé, débarrassé du moule extérieur, depuis le poste de vulcanisation 3 vers le poste noyau 4. La même potence 7 peut transporter un noyau 1 nu, c'est à dire débarrassé du pneu vulcanisé précédemment fabriqué, depuis le poste noyau 4 vers le poste d'assemblage 2.

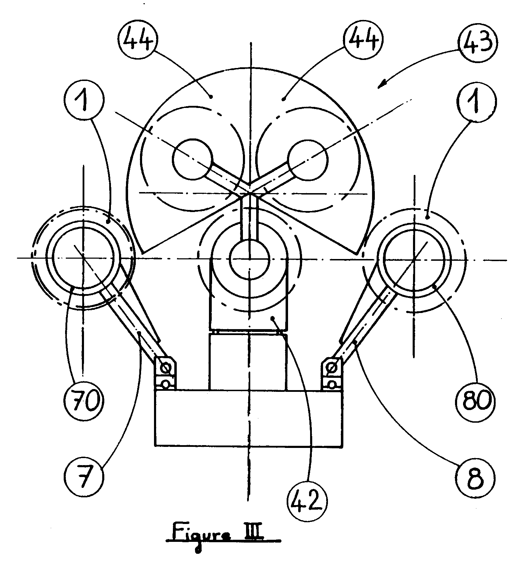

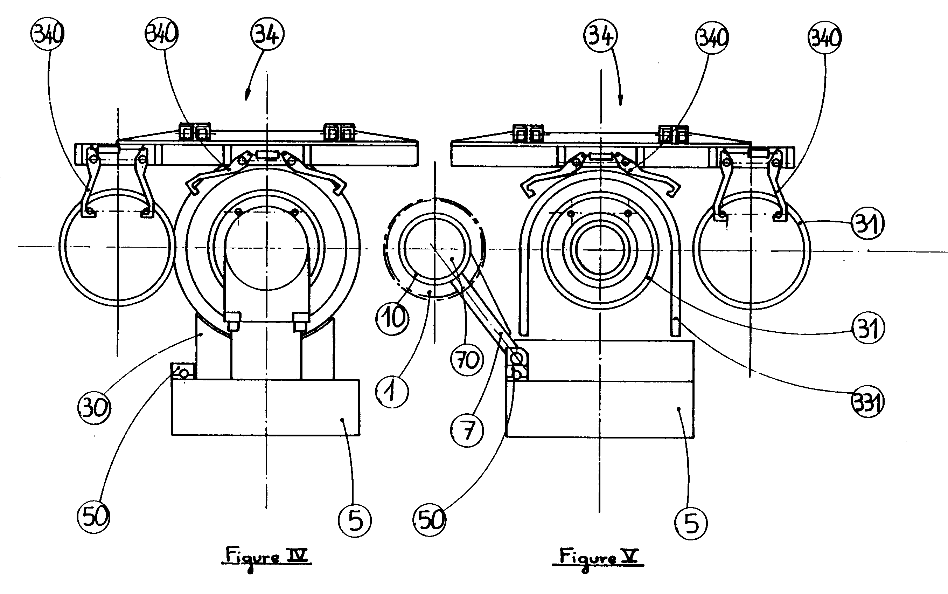

En variante, on peut installer (voir figure 3) une autre potence 8 montée coulissante le long de l'autre côté du châssis, elle aussi équipée d'un préhenseur 80 capable de saisir un noyau 1 par la base radialement intérieure de celui-ci. En utilisant deux potences, il est possible d'effectuer deux transports en tout ou partie simultanément. Par exemple, la seconde potence 8 est chargée des transports depuis le poste de vulcanisation 3 vers le poste noyau 4, et depuis celui-ci vers le poste d'assemblage 2, ou bien seulement de ce dernier transport.

Il est intéressant, afin d'optimiser l'utilisation de l'ensemble des organes de la machine, d'effectuer au poste de manipulation du support différentes opérations concernant ledit support. C'est la raison pour laquelle des moyens pour séparer le pneumatique vulcanisé de son support sont de préférence installés à un poste dédié à la manipulation du support. C'est aussi la raison pour laquelle l'assemblage et le désassemblage du support sont effectués au poste de manipulation du support. C'est aussi pour obtenir le même avantage que l'on peut effectuer une opération de refroidissement forcé d'un support à un poste de manipulation du support.

Ainsi, au poste noyau 4, une unité de montage 40 assure l'assemblage et le démontage des noyaux. Plus généralement, une telle unité assure le démantèlement et la reconstitution du support. On sait en effet que les noyaux, pour pouvoir être escamotés d'un pneumatique vulcanisé, doivent être réalisés en plusieurs éléments que l'on puisse extraire du pneu par l'espace disponible entre et à l'intérieur des talons du pneu. Cette unité 40 comporte autant de poignards 41 qu'il y a d'éléments dans un noyau 1. Chaque poignard est monté sur un mécanisme 45 assurant individuellement des déplacements indépendants dans les directions radiale et axiale desdits éléments (en référence à l'axe d'un noyau au poste noyau).

Supposons qu'un noyau portant un pneu vulcanisé est introduit au poste noyau 4 par la potence 7 (voir moitié inférieure de la zone centrale du poste noyau 4 aux figures 1 et 2). Un translateur 42, pouvant coulisser sur une plate-forme 420, saisit la jante 10 par le côté laissé libre par le préhenseur 70. Le préhenseur 70 se déconnecte et la potence 7 s'esquive. Le translateur recule à sa position primitive (voir partie inférieure de la zone gauche du poste noyau 4 à la figure 1) tout en emmenant le noyau 1 portant un pneu vulcanisé.

Une potence d'évacuation 9 prend ensuite la position apparaissant dans la moitié supérieure de la zone centrale du poste noyau 4, à la figure 1. La fonction de la potence 9 est d'enlever le pneumatique vulcanisé hors de la machine. A cette fin, ladite potence d'évacuation 9 est abaissée à ladite position. Le translateur 42 avance pour insérer le pneu dans la potence d'évacuation 9. Celle-ci saisit le pneu par la bande de roulement. Tous les poignards 41 sont engagés sur les éléments de noyau correspondants et verrouillés sur ceux-ci. Dès lors, le translateur peut désolidariser la jante 10 du noyau 1 et emporter cette dernière pour libérer les éléments du noyau 1 (voir partie supérieure de la zone gauche du poste noyau 4 à la figure 1). Ensuite, tous les éléments du noyau peuvent être enlevés les uns après les autres du pneu, par un mouvement du poignard 41 correspondant, d'abord radial centripète, puis un mouvement axial de dégagement, et enfin un mouvement radial centrifuge suffisant pour laisser la place nécessaire au mouvement des autres éléments. Le pneu maintenu par la potence d'évacuation 9 peut être évacué hors de la machine.

La reconstruction (c'est à dire l'assemblage) du noyau 1 s'opère en ordre inverse. Un mouvement inverse des poignards ramène les éléments du noyau à leur position antérieure (celle qu'ils occupaient quand le noyau 1 portait un pneu vulcanisé). Le translateur 42 ramène la jante 10 pour supporter et verrouiller tous les éléments du noyau 1, puis les poignards sont déverrouillés et évacués.

Le translateur 42 peut ensuite introduire le noyau 1 dans une installation de refroidissement 43 du noyau. L'installation de refroidissement 43 est intégrée au poste 4 de montage et de démontage du noyau. Elle comporte des tuyères soufflant de l'air à l'intérieur du noyau, la partie interne de celui-ci formant un creux ouvert radialement vers l'intérieur.

En variante, le noyau 1 peut être introduit dans l'installation de refroidissement 43 alors qu'il supporte encore le pneu sortant du poste de vulcanisation 3. Dans ce cas, le pneu est refroidi quelque peu avant d'être débarrassé du noyau 1. Le noyau peut ensuite être réutilisé pour un nouvel assemblage immédiatement ou après une attente au poste noyau 4, ou subir préalablement un autre refroidissement, selon les conditions de température indiquées ci-dessus, et selon la disponibilité du poste d'assemblage 2.

L'installation de refroidissement 43 peut comporter, comme représenté à la figure 3, plusieurs cellules 44 (ici deux) susceptibles d'accueillir chacune un noyau monté, nu ou portant un pneumatique. Cela permet de disposer d'un temps suffisant pour abaisser la température des noyaux utilisés au niveau convenable, et cela permet aussi, lorsqu'on utilise deux noyaux par moule, de disposer d'endroits en nombre suffisant pour accueillir l'ensemble des noyaux circulant sur la machine.

Le poste de vulcanisation 3 comporte une emboîteuse 30 permettant de refermer ou d'ouvrir un moule extérieur 31 autour du pneumatique porté par le noyau. Ledit moule extérieur 31 comporte deux coquilles 310 pour le moulage des flancs et une partie 311 moulant la bande de roulement. L'emboîteuse 30 comportant une porte latérale 32 utilisée comme moyen de déplacement d'une coquille 310 du moule extérieur 31. L'emboîteuse 30 est équipée des moyens permettant de transférer au moule et au noyau les calories nécessaires à la vulcanisation (par exemple rayonnement infra rouge, induction électromagnétique, etc).

La machine illustrant la présente invention est prévue pour être utilisée avec jusqu'à quatre moules extérieurs simultanément. Le poste de vulcanisation comporte donc trois logements annexes 33 associés à l'emboîteuse 30, permettant de maintenir chacun un moule extérieur 31, contenant le pneu sur son noyau, isolé de l'environnement pour limiter les déperditions calorifiques au moins pendant le temps nécessaire à la vulcanisation. Chaque logement 33 est délimité par des cloisons latérales 330 et un tunnel coulissant 331 pouvant se déplacer sur ou sous le tunnel coulissant 331 voisin. Un tel poste de vulcanisation, utilisé avec au moins un logement annexe, permet de disposer d'une installation de cuisson collective, qui présente l'avantage de, quels que soient les moyens d'assemblage qui sont utilisés, pouvoir utiliser de façon plus intensive les mécanismes assurant les mouvements du moule, au lieu de les laisser immobiles une grande partie du temps nécessaire à la vulcanisation.

Des moyens de transfert du moule extérieur assurent le déplacement de celui-ci entre l'emboîteuse 30 et le ou l'un des logements annexes 33 prévus. A cette fin, on voit un chariot de transfert 34 qui comporte deux pinces articulées 340 pouvant saisir chacune un moule.

Supposons qu'un pneu est en fin de période de vulcanisation dans l'un des logements, et qu'un autre vient tout juste d'être emboîté dans un moule à l'emboîteuse 30, et se trouve prêt pour un transfert vers l'un des logements annexes. Le chariot de transfert 34 se déplace, s'il ne s'y trouvait pas déjà en attente, et présente l'une de ses deux pinces 340 ouverte, à l'aplomb du logement qu'il faut libérer. Le tunnel coulissant 331 correspondant s'ouvre. La pince 340 saisit le moule 1 et le soulève légèrement.

Le chariot se déplace transversalement, puis longitudinalement jusqu'à l'emboîteuse 30. Entre-temps, la porte 32 de celle-ci s'est ouverte en se déplaçant longitudinalement, tout en portant un moule extérieur par l'une de ses coquilles 310. La pince 340 encore libre saisit ce moule qui est alors libéré par la porte 32 de l'emboîteuse. Le chariot de transfert 34 se déplace latéralement jusqu'à ce que l'autre moule extérieur puisse être saisi par la porte de l'emboîteuse. Le moule contenant le pneu vulcanisé peut ensuite être réintroduit dans l'emboîteuse pour être débarrassé du moule extérieur, pendant que le moule contenant le pneu en début de vulcanisation peut être emmené dans un logement 33 par le chariot de transfert 34.

Les mouvements des moyens de transport et du chariot de transfert sont de préférence placés sous le contrôle d'un automatisme chargé d'un programme lui permettant de choisir la position (poste donné, cellule donnée au poste noyau) vers laquelle les potences transportent un noyau donné en fonction de la séquence normale d'opérations de fabrication du pneu et en fonction de l'occupation des postes au moment d'un transfert, et de choisir la position vers laquelle le chariot de transfert conduit un moule donné en fonction de la séquence normale d'opérations de fabrication du pneu et en fonction de l'occupation des positions disponibles au poste de vulcanisation au moment d'un transfert.

En assurant la circulation d'un ou de plusieurs supports entre trois postes séparés, un poste d'assemblage 2, un poste de vulcanisation 3 et enfin un poste 4 de manipulation du support, on réalise un cycle extrêmement compact et on atteint une excellente productivité de la machine. En particulier, le poste de manipulation du support 4 permet l'extraction et le remontage de celui-ci, et sa mise à une température idéale pour reprendre une nouvelle confection, sans mobiliser les autres postes de la machine.

Bien entendu, la présente description n'est pas limitative. De nombreuses variantes constructives de machines selon la présente invention peuvent être réalisées. Par exemple, l'invention peut être utilisée avec d'autres types de support rigide qu'un noyau. Ou encore, l'invention peut être utilisée avec un ou plusieurs organes de vulcanisation à position unique (c'est à dire sans logement annexe) associés à un poste d'assemblage. L'invention peut aussi être utilisée avec des moules de dimensions différentes utilisés simultanément sur la même machine, pour fabriquer des pneus de différents types.

## Revendications

1. Procédé de fabrication de pneumatiques en caoutchouc, comportant une étape d'assemblage suivie d'une étape de moulage et de vulcanisation suivie d'une étape de démoulage, l'étape de vulcanisation utilisant un moule imposant au pneumatique au moins en partie sa forme finale de fabrication, ledit moule étant constitué de plusieurs éléments, séparables les uns des autres, au moins un desdits éléments formant un support démantelable formant, en fonctionnement lors de l'assemblage, une surface de révolution stable, ledit support étant utilisé pour ladite fabrication depuis l'assemblage jusqu'à la vulcanisation, comprenant les étapes suivantes :
1) reconstituer la configuration initiale utilisée en assemblage pour ledit support et positionner le support à un poste d'assemblage du pneumatique,
2) amener successivement et au moins en partie sur ledit support, en prenant pour référence d'assemblage ledit support, tous les constituants du pneumatique, dans l'ordre et à la place requis par l'architecture du pneumatique,
3) transférer ledit support à un poste de vulcanisation,
4) fermer l'espace de moulage du pneumatique et procéder à la vulcanisation de celui-ci, par l'action de la température et de la pression, pendant une période de temps déterminée par la loi de vulcanisation du pneumatique considéré,
5) démouler le pneumatique, cette opération comprenant un démantèlement dudit support pour libérer le pneumatique, et transférer ledit support pour reprendre les étapes précédentes et ainsi enchaîner la fabrication d'un autre pneumatique,
lesdits transferts étant effectués par au moins un moyen de transfert circulant sur un châssis, ledit châssis étant utilisé comme support desdits transferts, et auquel sont fixés le poste d'assemblage et le poste de vulcanisation et permettant de transporter les organes qu'il supporte en un état opérationnel.

2. Procédé selon la revendication 1, dans lequel ledit support est refroidi pour le ramener à une température comprise entre 80°C et 110°C, après l'étape de vulcanisation et avant d'enchaîner la fabrication d'un autre pneumatique.

3. Procédé selon la revendication 1, dans lequel le démantèlement dudit support est effectué dans un poste dédié à la manipulation du support, le poste de manipulation étant supporté par ledit châssis.

4. Procédé selon la revendication 1, dans lequel ledit support est un noyau démontable, permettant de définir la surface interne du pneumatique, sur lequel on dépose les différents constituants du pneumatique, le procédé comportant les étapes suivantes :
- fermer une partie extérieure de moule autour du pneumatique cru fabriqué sur le noyau,
- apporter à la partie extérieure du moule et audit noyau les calories nécessaires à la vulcanisation,
- ouvrir la partie extérieure du moule,
- démonter et extraire le noyau hors de l'intérieur du pneumatique pour séparer celui-ci du noyau, et évacuer le pneumatique,
- reconstituer le noyau servant de support.

5. Procédé selon la revendication 1, caractérisé en ce que l'on utilise au moins deux supports et l'on effectue l'étape 2 au moins en partie en même temps que l'on effectue l'étape 4.

6. Procédé selon l'une des revendications 1 à 5, caractérisé en ce que, au poste d'assemblage, le support est mis en rotation pendant que l'on amène les différents constituants.

7. Machine de fabrication de pneumatiques utilisant au moins un support formant, en configuration utilisée pour l'assemblage, une surface de révolution présentant une forme continue, proche de la forme finale de fabrication du pneumatique, ledit support étant utilisé comme surface de référence pour la fabrication desdits pneumatiques du début de l'assemblage jusqu'à la vulcanisation, ladite machine comportant, arrangés de façon adjacente sur un même châssis (5) :
- un poste d'assemblage (2) du pneumatique, comportant des moyens pour saisir et maintenir le support et des moyens pour former le pneumatique cru en déposant sur le support différents constituants dans l'ordre et à la place requise par l'architecture du pneumatique,
- un poste de vulcanisation (3),
- des moyens de transport du support entre les différents postes circulant sur ledit châssis.

8. Machine selon la revendication 7, dans laquelle ledit support est démantelable, la machine comportant des moyens pour démanteler ledit support pour libérer le pneumatique après vulcanisation ainsi que des moyens pour reconstituer ledit support avant son utilisation pour former le pneumatique cru.

9. Machine selon la revendication 8, caractérisée en ce que lesdits moyens pour démanteler le support et lesdits moyens pour reconstituer le support sont installés à un poste (4) dédié à la manipulation du support, disposé sur ledit châssis (5) de façon adjacente à au moins l'un des deux autres postes.

10. Machine selon l'une des revendications 7 à 9, caractérisée en ce que lesdits moyens de transport du support coulissent le long d'un moyen de guidage monté de façon solidaire dudit châssis.

11. Machine selon la revendication 9, caractérisée en ce que lesdits moyens de transport du support sont utilisés pour les mouvements suivants :
- transporter le support portant un pneumatique cru depuis le poste d'assemblage (2) vers le poste de vulcanisation (3),
- transporter le support sortant du poste de vulcanisation (3) vers le poste de manipulation (4) du support,
- transporter le support depuis le poste de manipulation (4) vers le poste d'assemblage.

12. Machine selon la revendication 9 ou 11, caractérisée en ce que le poste de manipulation (4) du support comporte des moyens pour séparer le pneumatique vulcanisé de son support.

13. Machine selon l'une des revendications 7 à 12, dans laquelle ledit support est un noyau permettant de définir la surface interne du pneumatique, et sur lequel on dépose progressivement les différents constituants du pneumatique, le moule (31) étant constitué par ledit noyau et par une partie extérieure (310, 311) de moule.

14. Machine selon la revendication 13, dans laquelle le noyau est un noyau rigide démontable (1).

15. Machine selon l'une des revendications 9, 11 ou 12, caractérisée en ce que le poste de manipulation du support (4) comporte une installation de refroidissement (43) dudit support.

16. Machine selon la revendication 15, caractérisée en ce que ladite installation de refroidissement (43) comporte plusieurs cellules (44) susceptibles d'accueillir un support dans sa configuration utilisée pour l'assemblage, nu ou portant un pneumatique.

17. Machine selon l'une des revendications 9, 11, 12 ou 15, caractérisée en ce que lesdits postes (2, 3, 4) sont alignés sur ledit châssis (5).

18. Machine selon l'une des revendications 7 à 17, caractérisée en ce que les moyens de transport sont agencés pour assurer un transfert du support, l'axe de celui-ci étant horizontal.

19. Machine selon la revendication 18, caractérisée en ce que les moyens de transport sont agencés pour assurer un transfert du noyau selon un mouvement au moins partiellement parallèle à son axe.

20. Machine selon la revendication 13 ou 14, caractérisée en ce que lesdits moyens de transport comprennent une potence (7) montée coulissante le long du châssis (5), équipée d'un préhenseur (70) capable de saisir un noyau par la base radialement intérieure de celui-ci.

21. Machine selon la revendication 14, caractérisée en ce que lesdits moyens de transport comprennent une potence (8) montée coulissante le long du châssis (5), équipée d'un préhenseur (80) capable de saisir un noyau rigide (1) par la base radialement intérieure de celui-ci, utilisée pour transporter le noyau rigide à l'état monté depuis le poste (4) de montage et démontage du noyau vers le poste d'assemblage (2), et une autre potence (7) montée coulissante le long de l'autre côté du châssis (5), équipée d'un préhenseur (70) capable de saisir un noyau rigide (1) par la base radialement intérieure de celui-ci, utilisée pour transporter le noyau rigide (1) pour les autres mouvements.

22. Machine selon l'une des revendications 7 à 21, caractérisée en ce que le poste de vulcanisation (3) comporte une emboîteuse (30) permettant d'assurer le moulage du pneumatique cru en lui conférant la pression de moulage nécessaire et assurant un transfert de calories vers ledit pneu, et en ce que le poste de vulcanisation (3) comporte au moins un logement annexe (33) associé à l'emboîteuse, permettant de maintenir le moule contenant le pneu isolé de l'environnement pour limiter les déperditions calorifiques au moins pendant le temps nécessaire à la vulcanisation, et des moyens de transfert (34) du moule fermé entre l'emboîteuse et le ou l'un des logements annexes.

23. Machine selon l'une des revendications 13, 14, 20 ou 21, caractérisée en ce que le poste de vulcanisation (3) comporte une emboîteuse permettant de refermer ou d'ouvrir ladite partie extérieure de moule autour du pneumatique porté par le noyau, ladite partie extérieure de moule ayant deux coquilles pour le moulage des flancs et une partie moulant la bande de roulement, ladite emboîteuse comportant une porte latérale utilisée comme moyen de déplacement d'une coquille du moule extérieur, ladite emboîteuse étant équipée des moyens permettant de transférer au moule et au noyau des calories nécessaires à la vulcanisation.

24. Machine selon l'une des revendications 13, 14, 20, 21 ou 23, caractérisée en ce que :
- lesdits moyens de transport comprennent une potence (7) montée coulissante le long du châssis (5), équipée d'un préhenseur (70) capable de saisir un noyau par la base radialement intérieure de celui-ci,
- elle est utilisée avec au moins un noyau de plus que de parties extérieures (310, 311) de moule (31), et en ce que le poste de vulcanisation (3) comporte une emboîteuse (30) permettant d'assurer le moulage du pneumatique cru en lui conférant la pression de moulage nécessaire et assurant un transfert de calories vers ledit pneu,
- le poste de vulcanisation (3) comporte au moins un logement annexe (33) associé à l'emboîteuse, permettant de maintenir le moule contenant le pneu isolé de l'environnement pour limiter les déperditions calorifiques au moins pendant le temps nécessaire à la vulcanisation, et des moyens de transfert (34) du moule fermé entre l'emboîteuse et le ou l'un des logements annexes,
- les mouvements des moyens de transport et les moyens de transfert sont placés sous le contrôle d'un automatisme chargé d'un programme lui permettant de choisir la position vers laquelle les potences transportent un noyau donné en fonction de la séquence normale d'opérations de fabrication du pneu et en fonction de l'occupation des postes au moment d'un transfert, et de choisir la position vers laquelle les moyens de transfert conduisent un moule donné en fonction de la séquence normale d'opérations de fabrication du pneu et en fonction de l'occupation des positions disponibles au poste de vulcanisation au moment d'un transfert.

25. Poste de vulcanisation (3), utilisant au moins un noyau permettant de définir la surface interne du pneumatique, et sur lequel on a déposé progressivement les différents constituants du pneumatique, comprenant :
- une emboiteuse comportant des moyens pour fixer une partie extérieure de moule, ladite partie extérieure de moule ayant deux coquilles pour le moulage des flancs et une partie moulant la bande de roulement, ladite emboiteuse comportant des moyens permettant de refermer ou d'ouvrir ladite partie extérieure de moule autour du pneumatique porté par le noyau, ladite emboîteuse étant équipée des moyens permettant de transférer au moule et au noyau des calories nécessaires à la vulcanisation,
- au moins un logement annexe (33) associé à l'emboîteuse, permettant de maintenir le moule contenant le pneu isolé de l'environnement pour limiter les déperditions calorifiques au moins pendant le temps nécessaire à la vulcanisation,
- des moyens de transfert (34) du moule fermé entre l'emboîteuse et le ou l'un des logements annexes.

26. Poste selon la revendication 25, dans lequel ladite emboîteuse comporte une porte latérale utilisée comme moyen de déplacement d'une coquille du moule extérieur.

27. Poste selon la revendication 25 ou 26, dans lequel le noyau est un noyau rigide démontable (1).

## Claims

1. A method of manufacturing rubber tyres, comprising an assembly step followed by a moulding and vulcanisation step, followed by a mould removal step, the vulcanisation step employing a mould which imposes at least part of its final manufactured shape on the tyre, said mould being formed of several elements which are separable from each other, at least one of said elements forming a dismantlable support forming, in operation upon assembling, a stable surface of revolution, said support being used for said manufacture from the assembling up to the vulcanisation, comprising the following steps:
1) reconstituting the initial configuration used in assembly for said support and positioning the support at a tyre-assembly station;
2) successively bringing all the components of the tyre, at least in part, onto said support, said support being taken as the assembly reference, in the order and at the place required by the architecture of the tyre;
3) transferring said support to a vulcanisation station;
4) closing the moulding space of the tyre and proceeding with its vulcanisation by the action of temperature and pressure for a period of time determined by the vulcanisation law of the tyre in question;
5) removing the tyre from the mould, this operation comprising dismantling of said support in order to release the tyre, and transferring said support to repeat the preceding steps and thus starting the manufacture of another tyre,
said transfers being effected by at least one transfer means circulating on a frame, said frame being used as a support for said transfers, and to which the assembly station and the vulcanisation station are fixed and which makes it possible to transport the elements which it supports in an operational state.

2. A process according to Claim 1, in which said support is cooled in order to bring it to a temperature of between 80°C and 110°C, after the vulcanisation step and before the starting of the manufacture of another tyre.

3. A process according to Claim 1, in which the dismantling of said support is effected in a station dedicated to handling of the support, the handling station being supported by said frame.

4. A process according to Claim 1, in which said support is a sectional core which makes it possible to define the inner surface of the tyre, on which core the different components of the tyre are deposited, the process comprising the following steps:
- closing an outer mould part around the raw tyre produced on the core,
- imparting the heat necessary for vulcanisation to the outer part of the mould and said core;
- opening the outer part of the mould;
- disassembling and extracting the rigid core from the inside of the tyre in order to separate the tyre from the core and evacuating the tyre;
- reconstituting the core serving as support.

5. A process according to Claim 1, characterised in that at least two supports are used and step 2 is carried out, at least in part, at the same time as step 4.

6. A process according to one of Claims 1 to 5, characterised in that, at the assembly station, the support is placed in rotation while the different components are fed.

7. A tyre manufacturing machine comprising at least one support which, in the configuration used for assembly, forms a surface of revolution having a continuous shape, close to the final shape of manufacture of the tyre, said support being used as a reference surface for the manufacture of said tyres from the start of the assembly up to the vulcanisation, said machine comprising, arranged adjacent each other on the same frame (5):
- a tyre assembly station (2) comprising means for grasping and holding the support and means for shaping the raw tyre by depositing on the support different components in the order and at the place required by the architecture of the tyre,
- a vulcanisation station (3),
- means for transporting the support between the different stations travelling on said frame.

8. A machine according to Claim 7, in which said support is dismantlable, the machine comprising means for dismantling said support in order to free the tyre after vulcanisation, as well as means for reconstituting said support before its use to shape the raw tyre.

9. A machine according to Claim 8, characterised in that said means for dismantling the support and said means for reconstituting the support are installed at a station (4) dedicated to the handling of the support, which station is arranged on said frame (5) adjacent at least one of the other two stations.

10. A machine according to one of Claims 7 to 9, characterised in that said means for the transport of the support slide along a guide means mounted rigidly on said frame.

11. A machine according to Claim 9, characterised in that said means for the transport of the support are used for the following movements:
- to transport the support bearing a raw tyre from the assembly station (2) towards the vulcanisation station (3),
- to transport the support coming from the vulcanisation station (3) towards the support-handling station (4),
- to transport the support from the handling station (4) towards the assembly station.

12. A machine according to Claim 9 or 11, characterised in that the support-handling station (4) comprises means for separating the vulcanised tyre from its support.

13. A machine according to one of Claims 7 to 12, in which said support is a core defining the inner surface of the tyre and on which the different components of the tyre are progressively deposited, the mould (31) being formed by said core and by an outer mould part (310, 311).

14. A machine according to Claim 13, in which the core is a sectional rigid core (1).

15. A machine according to one of Claims 9, 11 or 12, characterised in that the support-handling station (4) comprises an installation (43) for the cooling of said support.

16. A machine according to Claim 15, characterised in that said cooling installation (43) comprises several chambers (44) capable of receiving a support, with or without a tyre, in its configuration used for the assembling.

17. A machine according to one of Claims 9, 11, 12 or 15, characterised in that said stations (2, 3, 4) are aligned on said frame (5).

18. A machine according to one of Claims 7 to 17, characterised in that the transporting means are adapted to ensure a transfer of the support with its axis horizontal.

19. A machine according to Claim 18, characterised in that the transport means are adapted to ensure a transfer of the core in a movement at least partially parallel to its axis.

20. A machine according to Claim 13 or 14, characterised in that said transport means comprise a bracket (7) which is slidably mounted along the frame (5) and is equipped with a gripper (70) capable of grasping a core by the radially inner base thereof.

21. A machine according to Claim 14, characterised in that said transporting means comprise a bracket (8) which is slidably mounted along the frame (5) and is equipped with a gripper (80) capable of grasping a rigid core (1) by the radially inner base thereof, used for transporting the rigid core in mounted state from the core mounting and dismounting station (4) towards the assembly station (2), and another bracket (7) mounted slidably along the other side of the frame (5) and equipped with a gripper (70) capable of grasping a rigid core by the radially inner base thereof, used to transport the rigid core (1) for the other movements.

22. A machine according to one of Claims 7 to 21, characterised in that the vulcanisation station (3) comprises an encaser (30) which makes it possible to ensure the moulding of the raw tyre by imparting thereto the necessary moulding pressure and ensuring a transfer of heat towards said tyre, and in that the vulcanisation station (3) comprises at least one annexed housing (33) associated with the encaser which makes it possible to maintain the mould containing the tyre isolated from the environment in order to avoid heat losses at least during the time necessary for the vulcanisation, and means for the transfer (34) of the closed mould between the encaser and the annexed housing or one of the annexed housings.

23. A machine according to one of Claims 13, 14, 20 or 21, characterised in that the vulcanisation station (3) comprises an encaser which makes it possible to close or open said mould outer part around the tyre borne by the core, said outer mould part having two shells for moulding the sidewalls and a part moulding the tread, said encaser having a side door used as means for displacement of a shell of the outer mould, said encaser being equipped with means permitting the transfer to the mould and core of the heat necessary for the vulcanisation.

24. A machine according to one of Claims 13, 14, 20, 21 or 23, characterised in that:
- said transporting means comprise a bracket (7) mounted for sliding along the frame (5) and equipped with a gripper (70) capable of gasping a core by the radially inner base thereof,
- it is used with at least one more core than there are outer parts (310, 311) of the mould (31) and in that the vulcanisation station includes an encaser (30) which makes it possible to ensure the moulding of the raw tyre by imparting thereto the necessary moulding pressure and ensuring a transfer of heat towards said tyre,
- the vulcanisation station (3) comprises at least one annexed housing (33) associated with the encaser, making it possible to maintain the mould containing the tyre isolated from the environment in order to avoid heat losses, at least during the time necessary for the vulcanisation, and means (34) for transferring the closed mould between the encaser and the annexed housing or one of the annexed housings,
- the movements of the transport means and the transfer means are placed under the control of an automatic system having a program enabling it to select the position towards which the brackets transport a given core as a function of the normal sequence of the manufacturing operations of the tyre and as a function of the occupation of the stations at the time of a transfer, and to select the position towards which the transfer means bring a given mould as a function of the normal sequence of tyre manufacturing operations and as a function of the occupation of the positions available at the vulcanisation station at the time of a transfer.

25. A vulcanisation station (3) using at least one core making it possible to define the inner surface of the tyre and on which the different components of the tyre have been progressively deposited, comprising:
- an encaser comprising means for fixing an outer mould part, said outer mould part having two shells for the moulding of the sidewalls and a part moulding the tread, said encaser comprising means making it possible to close or open said mould outer part around the tyre borne by the core, said encaser being equipped with means permitting the transfer of the heat necessary for the vulcanisation to the mould and the core,
- - at least one annexed housing (33) associated with the encaser, making it possible to keep the mould containing the tyre isolated from the environment in order to limit the heat losses at least during the time necessary for the vulcanisation,
- means for transferring (34) of the closed mould between the encaser and the annexed housing or one of the annexed housings.

26. A station according to Claim 25, in which said encaser comprises a side door used as means for displacement of a shell of the outer mould.

27. A station according to Claim 25 or 26, in which the core is a separable rigid core (1).

## Patentansprüche

1. Verfahren zur Herstellung von Luftreifen aus Gummi, mit einem Konfektionierungsschritt, der von einem Abform- und Vulkanisierungsschritt gefolgt ist, der von einem Ausformungsschritt gefolgt ist, wobei der Vulkanisierungsschritt eine Form benutzt, die dem Reifen mindestens teilweise seine endgültige Herstellungs-Formgebung mitteilt, die genannte Form aus mehreren Elementen gebildet ist, die voneinander trennbar sind, mindestens eines der genannten Elemente einen abnehmbaren Träger bildet, der, wenn er während der Konfektionierung wirksam ist, eine stabile Rotationsfläche bildet, und der genannte Träger für die genannte Herstellung von der Konfektionierung bis zur Vulkanisierung benutzt wird, mit den folgenden Schritten:
1) Herstellen der Anfangsausbildung für den genannten Träger, die bei der Konfektionierung benutzt wird, und Anordnen des Trägers an einer Reifen-Konfektionierungsstation,
2) aufeinanderfolgendes und mindestens teilweises Heranbringen auf den genannten Träger, während man den genannten Träger als Bezug für die Konfektionierung heranzieht, aller Bestandteile des Reifens in der Reihenfolge und an der Stelle, die vom Aufbau des Reifens gefordert sind,
3) Überführen des genannten Trägers an eine Vulkanisierungsstation,
4) Schließen des Abformraumes des Reifens und Durchführen seiner Vulkanisierung durch Einwirkung von Temperatur und Druck während eines Zeitraums, der durch das Vulkanisierungsgesetz des in Betracht gezogenen Reifens bestimmt ist, und
5) Ausformen des Reifens, wobei dieser Vorgang ein Abtragen des genannten Trägers umfaßt, um den Reifen freizusetzen, und Überführen des genannten Trägers, um die vorausgehenden Schritte wiederaufzunehmen und so die Herstellung eines anderen Reifens anzuknüpfen,
wobei die genannten Überführungen durch mindestens eine Überführungseinrichtung bewirkt werden, die auf einem Rahmen umläuft, der genannte Rahmen als Träger für die genannten Überführungen benutzt wird und an diesen die Konfektionierungsstation und die Vulkanisierungsstation befestigt sind, und er es gestattet, diese Organe zu fördern, die er im betriebsbereiten Zustand trägt.

2. Verfahren nach Anspruch 1, in dem der genannte Träger nach dem Vulkanisierungsschritt und vor dem Anknüpfen der Herstellung eines anderen Reifens abgekühlt wird, um ihn auf eine Temperatur zu bringen, die zwischen 80°C und 110°C liegt.

3. Verfahren nach Anspruch 1, in dem die Abtragung des genannten Trägers in einer Station vorgenommen wird, die für die Handhabung des Trägers bestimmt ist, und die Handhabungsstation vom genannten Rahmen getragen ist.

4. Verfahren nach Anspruch 1, in dem der genannte Träger ein zerlegbarer Kern ist, der es gestattet, die Innenoberfläche des Reifens festzulegen, auf der man die verschiedenen Bestandteile des Reifens auflegt, wobei das Verfahren die folgenden Schritte aufweist:
- Schließen eines äußeren Formteils rund um den Rohreifen, der auf dem Kern hergestellt ist,
- Zuführen der zur Vulkanisierung erforderlichen Wärmemengen zum Außenteil der Form und zum genannten Kern,
- Öffnen des Außenteils der Form,
- Zerlegen und Herausholen des Kerns aus dem Inneren des Reifens, um diesen vom Kern zu trennen, sowie Entfernen des Reifens, und
- Wiederherstellen des Kerns, der als Träger dient.

5. Verfahren nach Anspruch 1, dadurch gekennzeichnet, daß man mindestens zwei Träger benutzt, und daß man den Schritt 2 mindestens teilweise zur gleichen Zeit vornimmt, zu der man den Schritt 4 vornimmt.

6. Verfahren nach einem der Ansprüche 1 bis 5, dadurch gekennzeichnet, daß der Träger an der Konfektionierungsstation in Drehung versetzt ist, während man die verschiedenen Bestandteile heranbringt.

7. Maschine zur Herstellung von Reifen unter Benutzung mindestens eines formgebenden Trägers in einer Ausbildung, die für die Konfektion benutzt wird, wobei eine Rotationsfläche eine durchgehende Form darbietet, die der endgültigen Herstellungsform des Reifens nahekommt, der genannte Träger als Bezugsfläche für die Herstellung der genannten Reifen vom Anfang der Konfektion bis zur Vulkanisierung benutzt wird, und die Maschine in einer auf dem selben Rahmen (5) nebeneinander liegenden Anordnung die folgenden Elemente aufweist:
- eine Konfektionierungsstation (2) für den Reifen mit Mitteln zum Ergreifen und Halten des Trägers und Mitteln zum Formen des Rohreifens, indem auf den Träger verschiedene Bestandteile in der Reihenfolge und an der Stelle aufgelegt werden, die durch den Aufbau des Reifens gefordert sind,
- eine Vulkanisierungsstation (3) und
- Mittel zum Fördern des Trägers zwischen den verschiedenen Stationen im Umlauf auf dem genannten Rahmen.

8. Maschine nach Anspruch 7, worin der genannte Träger abtragbar ist und die Maschine Mittel aufweist, um den genannten Träger abzutragen, um den Reifen nach der Vulkanisierung freizusetzen, sowie Mittel zum Wiederaufbauen des genannten Trägers vor seiner Benutzung zum Formen des Rohreifens.

9. Maschine nach Anspruch 8, dadurch gekennzeichnet, daß die genannten Mittel zum Abtragen des Trägers und die genannten Mittel, um den Träger wieder aufzubauen, an einer Station (4) angebracht sind, die zur Handhabung des Trägers bestimmt ist und auf dem genannten Rahmen (5) neben mindestens einer der anderen Stationen angeordnet ist.

10. Maschine nach einem der Ansprüche 7 bis 9, dadurch gekennzeichnet, daß die genannten Mittel zum Fördern des Trägers längs Führungsmitteln gleiten, die fest am genannten Rahmen angebracht sind.

11. Maschine nach Anspruch 9, dadurch gekennzeichnet, daß die genannten Fördermittel für den Träger für die folgenden Bewegungen benutzt sind:
- Fördern des Trägers, der einen Rohreifen trägt von der Konfektionierungsstation (2) zur Vulkanisierungsstation (3),
- Fördern des Trägers, der die Vulkanisierungsstation (3) verläßt, zur Handhabungsstation (4) für den Träger, und
- Fördern des Trägers von der Handhabungsstation (4) zur Konfektionierungsstation.

12. Maschine nach Anspruch 9 oder 11, dadurch gekennzeichnet, daß die Handhabungsstation (4) für den Träger Mittel aufweist, um den vulkanisierten Reifen von seinem Träger zu trennen.

13. Maschine nach einem der Ansprüche 7 bis 12, worin der genannte Träger ein Kern ist, der es gestattet, die Innenoberfläche des Reifens festzulegen, und auf den man fortlaufend die verschiedenen Bestandteile des Reifens auflegt, wobei die Form (31) vom genannten Kern und einem äußeren Teil (310,311) der Form gebildet ist.

14. Maschine nach Anspruch 13, worin der Kern ein starrer, abbaubarer Kern (1) ist.

15. Maschine nach einem der Ansprüche 9, 11 oder 12, dadurch gekennzeichnet, daß die Handhabungsstation (4) für den Träger eine Kühleinrichtung (43) für den genannten Träger aufweist.

16. Maschine nach Anspruch 15, dadurch gekennzeichnet, daß die genannte Kühleinrichtung (43) mehrere Zellen (44) aufweist, die imstande sind, einen Träger in seiner Ausbildung aufzunehmen, die zur Konfektionierung benutzt ist, ob er nun leer ist oder einen Reifen trägt.

17. Maschine nach einem der Ansprüche 9, 11, 12 oder 15, dadurch gekennzeichnet, daß die genannten Stationen (2,3,4) auf dem genannten Rahmen (5) aufgereiht sind.

18. Maschine nach einem der Ansprüche 7 bis 17, dadurch gekennzeichnet, daß die Fördermittel dazu eingerichtet sind, eine Überführung des Trägers sicherzustellen, während dessen Achse horizontal liegt.

19. Maschine nach Anspruch 18, dadurch gekennzeichnet, daß die Fördermittel dazu eingerichtet sind, eine Überführung des Kernes in einer Bewegung sicherzustellen, die mindestens teilweise zu seiner Achse parallel ist.

20. Maschine nach Anspruch 13 oder 14, dadurch gekennzeichnet, daß die genannten Fördermittel einen Arm (7) aufweisen, der längs des Rahmens (5) verschieblich angebracht ist und mit einem Greifer (70) ausgestattet ist, der imstande ist, einen Kern an dessen radial innen liegender Basis zu ergreifen.

21. Maschine nach Anspruch 14, dadurch gekennzeichnet, daß die genannten Fördermittel einen Arm (8) aufweisen, der längs des Rahmens (5) verschieblich angebracht ist und mit einem Greifer (80) ausgestattet ist, der imstande ist, einen starren Kern (1) an dessen radial innen liegender Basis zu ergreifen, und der verwendet wird, um den starren Kern im zusammengebauten Zustand von der Station (4) zur Montage und Demontage des Kerns zur Konfektionierungsstation (2) zu fördern, und einen anderen Arm (7), der verschieblich längs der anderen Seite des Rahmens (5) angebracht ist und mit einem Greifer (70) ausgestattet ist, der imstande ist, einen starren Kern (1) an dessen radial innen liegender Basis zu ergreifen, und der verwendet wird, um den starren Kern (1) bei den anderen Bewegungen zu fördern.

22. Maschine nach einem der Ansprüche 7 bis 21, dadurch gekennzeichnet, daß die Vulkanisierungsstation (3) eine Ummantelung (30) aufweist, die es gestattet, die Abformung des Rohreifens dadurch sicherzustellen, daß sie ihm den notwendigen Abformdruck mitteilt und die Wärmemengen auf den genannten Reifen überträgt, und daß die Vulkanisierungsstation (3) mindestens einen angebauten Sitz (33) aufweist, der der Ummantelung zugeordnet ist und es gestattet, die Form, die den Reifen enthält, von der Umgebung getrennt zu halten, um die Wärmeverluste mindestens während der Zeit zu begrenzen, die zur Vulkanisierung erforderlich ist, sowie Überführungsmittel (34) für die geschlossene Form zwischen der Ummantelung und dem angebauten Sitz oder einem dieser.

23. Maschine nach einem der Ansprüche 13, 14, 20 oder 21, dadurch gekennzeichnet, daß die Vulkanisierungsstation (3) eine Ummantelung aufweist, die es gestattet, den genannten äußeren Formteil rund um den vom Kern getragenen Reifen zu schließen oder zu öffnen, wobei der genannte äußere Formteil zwei Koquillen für die Abformung der Flanken und einen Teil aufweist, der die Lauffläche abformt, die genannte Ummantelung eine seitliche Tür aufweist, die als Mittel zum Versetzen einer Koquille der äußeren Form benutzt wird, und die genannte Ummantelung mit Mitteln versehen ist, die es gestatten, auf die Form und auf den Kern die Wärmemengen zu übertragen, die für die Vulkanisierung erforderlich sind.

24. Maschine nach einem der Ansprüche 13, 14, 20, 21 oder 23, dadurch gekennzeichnet, daß:
- die genannten Fördermittel einen Arm (7) aufweisen, der längs des Rahmens (5) verschieblich angebracht ist und mit einem Greifer (70) ausgestattet ist, der imstande ist, einen Kern an dessen radial innen liegender Basis zu ergreifen,
- sie mit mindestens einem Kern sowie äuußeren Teilen (310,311) der Form (31) benutzt wird, und daß die Vulkanisierungsstation (3) eine Ummantelung (30) aufweist, die es gestattet, die Abformung des Rohreifens dadurch sicherzustellen, daß man ihm den erforderlichen Abformdruck mitteilt und die Überführung von Wärmemengen zum genannten Reifen sicherstellt,
- die Vulkanisierungsstation (3) mindestens einen angebauten Sitz (33) aufweist, der der Ummantelung zugeordnet ist und es gestattet, die Form, die den Reifen enthält, von der Umgebung isoliert zu halten, um Wärmeverluste mindestens während der Zeit zu begrenzen, die zur Vulkanisierung erforderlich ist, sowie Überfürungsmittel (34) für die geschlossene Form zwischen der Ummantelung und dem angebauten Sitz oder solchen Sitzen, und
- die Bewegungen der Fördermittel und der Überführungsmittel der Steuerung einer Automatik unterstellt sind, die mit einem Programm programmiert ist, das es ihr gestattet, die Lage zu wählen, in welche die Arme einen Kern fördern, aufgrund der Funktion der normalen Folge von Herstellungsvorgängen des Reifens und in Funktion der Besetzung der Stationen im Augenblick einer Überführung, sowie die Lage zu wählen, in welche die Überführungsmittel eine gegebene Form leiten, in Funktion der normalen Folge von Herstellungsvorgängen es Reifens und in Funktion der Besetzung der disponierbaren Lagen an der Vulkanisierungsstation im Augenblick einer Überführung.

25. Vulkanisierungsstation (3), die mindestens einen Kern benutzt, der es gestattet, die Innenoberfläche des Reifens festzulegen, und auf dem man fortlaufend die unterschiedlichen Bestandteile des Reifens aufgelegt hat, mit:
- einer Ummantelung, die Mittel aufweist, um einen äußeren Formteil zu befestigen, wobei der genannte äußere Formteil zwei Koquillen für die Abformung der Flanken und einen Teil aufweist, der die Lauffläche abformt, die genannte Ummantelung Mittel aufweist, um den genannten äußeren Formteil rund um den vom Kern getragenen Reifen zu schließen oder zu öffnen, und die genannte Ummantelung mit
- Mitteln ausgestattet ist, die es gestatten, auf die Form und den Kern die Wärmemengen zu übertragen, die zur Vulkanisierung erforderlich sind,
- mindestens einem angebauten Sitz (33), der einer Ummantelung zugeordnet ist und es gestattet, die Form, die den Reifen enthält, von der Umgebung isoliert zu halten, um Wärmeverluste mindestens während der Zeit zu begrenzen, die zur Vulkanisierung erforderlich ist, und
- Überführungsmitteln (34) für die geschlossene Form zwischen der Ummantelung und dem angebauten Sitz oder einem der angebauten Sitze.

26. Station nach Anspruch 25, worin die genannte Ummantelung eine seitliche Tür aufweist, die als Mittel zur Versetzung einer Koquille der Außenform benutzt wird.

27. Station nach Anspruch 25 oder 26, worin der Kern ein zerlegbarer, starrer Kern (1) ist.
